# EUROPEAN PATENT APPLICATION

(11) **EP 1 467 319 A2**
(43) Date of publication of application: **13.10.2004**
(21) Application number: 04445003.9
(22) Date of filing: 23.01.2004
(51) Int. Cl.: G06T 15/20

(54) **Simulation method**

(30) Priority: 23.01.2003 SE 0300181
(71) Applicant: Melerit AB, 582 25 Linköping (SE)
(72) Inventor: Henriksson, Ola, 58226 Linköping (SE)
(74) Representative: Berglund, Erik Wilhelm

(57) **Abstract**

Simulation method where one starts from a film completed with information for each picture of where it was recorded. Primarily the information depth-wise is of interest since the film with its two-dimensional frames in this way represents a three-dimensional reality in which then with digital technique interactively digital or analogous pictures may be inserted where so is desired. By knowing how the frames where recorded for each frame it is calculated at the displaying of each frame where in the frame and how large the digitally entered picture shall be depending on the distance to its virtual location.

## Description

### Introduction

This invention is related the simulation of movement along a predetermined course or road.

In order to train and test respectively train drivers to be in a train simulator it is desirable that one is able to simulate the real situations that a train driver can meet as realistically as possible. He or she must among other things with great reliability be able to discover and react on the status of the signals that are placed along the track. Today there exist no satisfying simulation method for this and to use only 3D graphics for instance does not give sufficient feeling of reality while the use of only filmed material do not provide the necessary interaction possibilities. There is thus a need for an improved simulation method for the above type of situations. Train drivers have a great responsibility and must react fast and appropriate also in fog darkness etc. It is important not only to be able to train this but it is also important that one is able to test this during different conditions as for instance fog, darkness etc.

In view of the above needs and problems it is the object of the invention to enable an interactive and realistic simulation of a movement along a course or road, for instance a railroad and in particular simulation of different weather and light situations.

The above object is in accordance with the invention solved for a film that has been recorded with a camera directed in the driving direction by registration or calculation of the depth values for the entire film or parts thereof. It is particularly advantageous if for each frame in the film the depth value of each pixel in the frame is calculated, that is in principle how far away from the camera the correspondence of the pixel in the reality is located. The depth information can in this case for instance be registered as a depth map corresponding to each frame in the film. The depth map is a gray scale frame where for instance black corresponds to objects that are very close to the camera and objects that are white are very far away while grey tones define depths therebetween.

By then allowing the depth information for each pixel to influence this driving in darkness, fog, rain, snow etc can be simulated even if the film has been recorded in daylight. In the case of darkness the pixel in question will be darker the greater the depth is. A headlight can be simulated by the pixels also becoming darker radially out from the center line of the headlight. By reducing the contrast or by making the pixels more diffuse or grey as a function of the distance from the camera/driver for instance fog can be simulated. The degree of fog can of course be controlled in real time as well as the degree of darkness, that is different stages of twilight as well as different combinations of darkness and fog etc.

The depth information in the pictures may be obtained in different ways. An advantageous way is to use two parallel cameras placed laterally a distance apart, stereoscopy. One of them is the main camera and is placed at the location of the drivers head. At a comparison of synchronous frames from the cameras close objects in the frames will be found at different coordinates (x, y) in the two corresponding frames, while objects located very far away will be found at the same coordinates. By known picture analyzing techniques one can in this way obtain an approximate depth value for each pixel by measuring the distance from a pixel in the right frame to where the same pixel is found in the left frame.

As an alternative one can during the filming with only one camera register important parameters as for instance start and end position, the velocity of the camera during the recording, the distance between the frames or the exact position of each frame. The recorded material can then be analyzed in order to obtain depth information for each pixel.

With this depth information the two-dimensional digital material becomes three-dimensional and can also be combined with three-dimensional computer graphics in a natural way.

By completing the frames in the film with parameter data, as in particular the displacement of the camera from frame to frame and then in particular the displacement in the direction of the movement along the rail, preferably also the lateral displacement or the successive angles from frame to frame parameter data defines or from this the course followed by the camera at recording of the film can be calculated. This means that if an interactive effect is to be placed, for instance in the form of a train signal, this can for each frame in the film be placed in the right position and with the right perspective, that is in particular size and furthermore the light intensity of the signal if it is a light signal can be reduced with the distance to the train, or be obstructed at bends or be weakened by fog.

By means of data collected at the recording of the film a geographic representation or map can be achieved in which the digital interactive effects can be superimposed with the correct look on present film frames.

The entire film remain in original condition, enabling "altering" of the inter-active effects.

At train simulation with the above mentioned invention virtual, controllable train signals may be placed along the railway, both at locations where there is a real correspondence in the film and entirely new locations. New virtual objects as for instance cars, meeting trains and animals can be placed and animated inter-actively in the simulation. If depth information is available also for the filmed material new light conditions as night, day and fog may be simulated in a visually realistic manner. The combination of recorded film and superimposed real time rendered graphics provide a clearly superior realism with retained interactivity as compared to other solutions.

In the most simple case one may for instance register the depth by recording the distance between the frames of the film, then one can in a number of frames, for instance every tenth, fiftieth etc manually mark the location in the frame of a signal device that one want to influence interactively and furthermore one defines where along the rail that the signal device is located. The location of the signal device in intermediate frames can be interpolated. The size of the signal device in each frame is calculated based on the distance of the signal device to this from the present camera location.

As an alternative one can consider digitally to identify and record the location of real signal devices in each frame where they appear by means of digital recognition technique in order to superimpose an interactively influenceable lens. This is in the case with train simulation facilitated by the signals frequently having a comparatively standardized appearance and distance to the rail respectively.

The invention will below be described in more detail in the form of an embodiment shown in the enclosed drawings.

### Combine film and graphics

At the building of a simulator according to this suggested model a data base is created with virtual graphic objects that are coupled to frame numbers in the film. These graphic objects have parameters as for instance position and orientation in three-dimensional coordinates.

When running the simulator the film is rendered frame for frame and from the data base is read what virtual objects that are to be rendered in real time and also the parameters in question for these objects. The parameters of the objects may be explicitly given for each frame or implicitly in form of start-/stop information coupled to frames that is then interpolated.

When information of the camera position for each frame is available film replay can easily be synchronized with computer graphics and other parameters from the simulator as virtual speed.

### Film material

The more parameters that can be registered at the time of recording the better and easier the transition from two-dimensional filmed reality to three-dimensional simulated world becomes. The camera has six degrees of freedom (position and orientation) and frame frequncy which are parameters that can be registered with known techniques during recording.

The absolutely most necessary in order to combine computer graphics and film in accordance with this invention is sufficient information to ascertain the length measure that the camera has moved in the length direction of the rail. It is also of importance that the frame frequency of the recording equipment is sufficiently high in relation to the camera movement in order for linear approximations of not registered parameters not to be misleading.

Preferably at recording of the film material the movement components that are perpendicular to the length direction of the rail are minimized. This is suggested to be achieved with some sort of Gyro stabilizing or other anti-shake equipment.

In order easily to achieve required speed and position measuring one can consider that the camera is moved with a constant speed with a known start/stop position.

At vehicle driven simulation it is also possible to trig the film camera by signals from the wheels of the vehicle so that all frames lie on exactly the same distance. This has the advantage that disturbing objects simply can be removed by stopping the vehicle, reverse and start again so that a continuous and undisturbed sequence is obtained.

At size-relations where the use of gps (global positioning system) is available such a method can be advantageous for distance calculation.

### Depth information

How the transformation of film to a three-dimensional computer model is carried out and the obtained degree of exactness that is achieved in the model depends in particular on how the basic material is recorded. Picture analysis algorithms to achieve a shake free film stream can be used if this has not been compensated for at the time of recording. With a single film stream depth information can be extracted by comparing subsequent frames with each other provided that the camera parameters and the positions of the two momentary frames are known. If two with each other synchronized cameras have been used to record the film in stereo even more precise depth information can be obtained by comparison of corresponding stereo frame pairs.

There exist techniques for the recording of a distance frame already at the time of the recording, for instance measurement with laser, that can then be linked to the visual material in order to build a three-dimensional computer model of the run of the rail.

### Advantages

The invention unites the realism and the accuracy in the reality by using real filmed frames at the same time as interactive digital models and effects problem free can be entered there into, as for instance signals, oncoming traffic, crossing traffic etc. In this way the interactivity that is basic for a simulator i retained.

One further simulation possibility is obtained with depth information extracted from the film material, in the otherwise static medium the light and sight conditions can be altered with retained realism. Each pixel in a film frame has its value modified depending on its depth value and the parameters of the present modification. All this without any new frame sequences having to be recorded. Night driving with headlights can be simulated if each pixel is made darker the further away from the camera and the longer away it is from the center of the frame. Fog is calculated in a similar way where each pixel is given a more grey/white color in relation to its depth value.

In addition to light and sight conditions one can also simulate weather effects as snow and rain by digitally in front of each frame adding a semi-transparent frame with snow flakes or raindrops, where the transparency depends on the depth value of the film in each pixel.

As apparent from the above the invention combines the realism at the recording of the reality with the possibilities that are available at digital picture processing.

As realized in particular digital cameras are suited for the invention, but one can of course also digitalize films recorded in other ways. Furthermore one can instead of recording speed or location when filming instead calculate this from data in the frame, for instance from intermittent side marking at a road, sleepers at a railroad etc.

Since the amount of information in the model hardly is larger than that in the original film the memory requirement for a simulation will be moderate, which increase the useability.

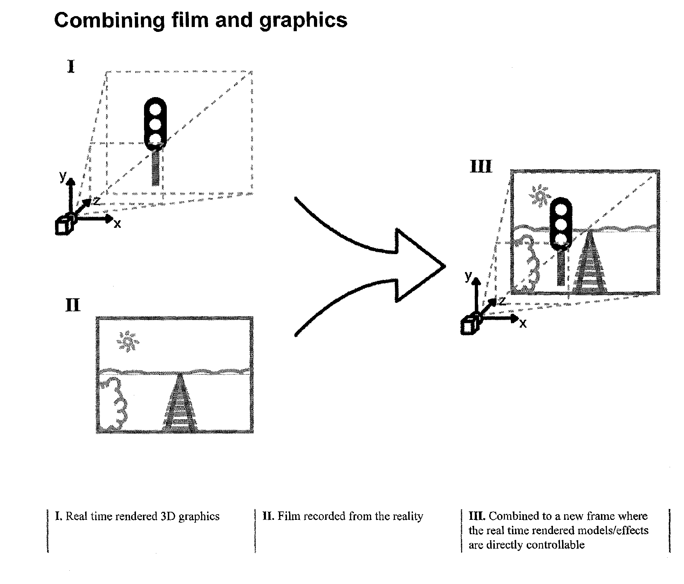

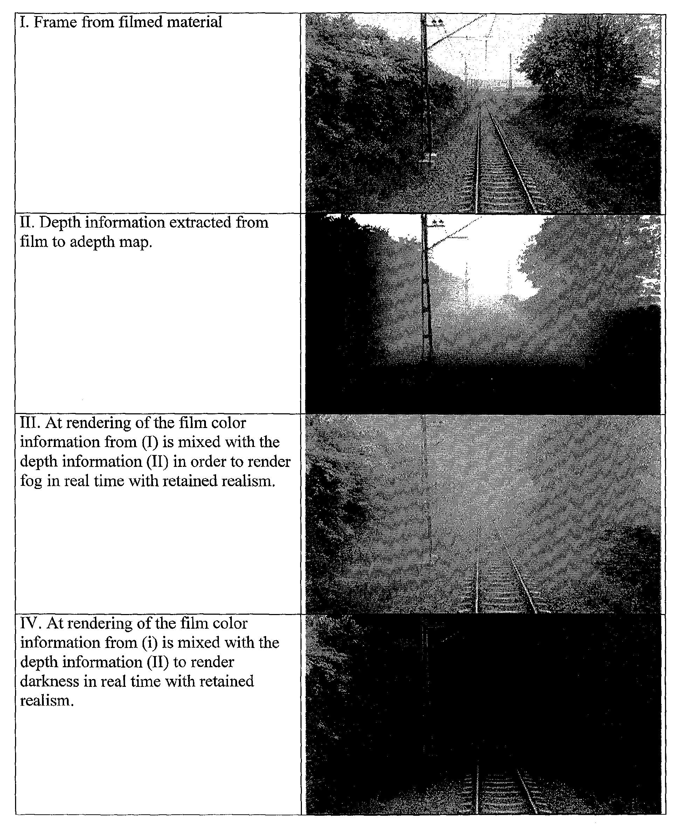

## Claims

1. Simulation method, **characterized in that** for a film that has been recorded with a camera in the driving direction during driving along a course is for each pixel or group of pixels in each frame recorded the depth, either at the time of recording or at post treatment of the materaila, that is in principle how far from the camera the correspondence of the pixel is located in the reality and that at the rendering of a simulated frame each pixel or area of pixels is influenced in a way that is a function of the depth information.

2. Simulation method according to claim 1, **characterized in that** driving in the dark with headlight is simulated by each pixel being made darker the farther away from the camera and the farther it is away from the center of the frame,

3. Simulation method according to any of the preceding claims, **characterized in that** fog is simulated by each pixel being given a more grey/white color in relation to its depth value.

4. Method according to any of the preceding claims, **characterized in that** one simulates weather effects as snow and rain etc by digitally in front of each frame placing a semitransparent frame with snow flakes or raindrops where the transparency depends on the depth value of the film in each pixel.

5. Simulation method **characterized in that** for a film that has been recorded with a camera directed in the drive direction while driving along a course the location where the camera was when each film frame was recorded, is recorded, or calculated or estimated directly or later.

6. Simulation method according to claim 5, **characterized in that** one manually define the location of a digital effect in some of the film frames, while the location in intermediate frames is interpolated. )

7. Simulation method according to claim 5, **characterized in that** the digital effect, for instance a train signal, is placed in the frames of the film based on for instance the rail in the case of trains by means of recognizing picture analysis.

8. Simulation method according to any of the claims 1 - 7, **characterized in that** also entered digital effects at the rendering in each film frame is rendered corresponding to its depth value in the same way as the pixels in the film.
